# EUROPÄISCHE PATENTSCHRIFT

(11) **EP 1 263 825 B1**
(45) Veröffentlichungstag und Bekanntmachung des Hinweises auf die Patenterteilung: **31.05.2006**
(21) Anmeldenummer: 01911572.4
(22) Anmeldetag: 01.02.2001
(51) Int. Cl.: C08G 18/08, C08G 18/28, C08G 18/32, C08G 18/34, C08G 18/42, C08G 18/66, C08G 18/76, C09D 175/04

(54) **PHYSIKALISCH, THERMISCH ODER THERMISCH UND MIT AKTINISCHER STRAHLUNG HÄRTBARE WÄSSRIGE ZUSAMMENSETZUNGEN UND IHRE FOLGEPRODUKTE SOWIE DEREN HERSTELLUNG**
AQUEOUS COMPOSITION THAT CAN BE HARDENED PHYSICALLY, THERMALLY OR THERMALLY AND WITH ACTINIC RADIATION AND THE DERIVATIVES AND PRODUCTION THEREOF
COMPOSITIONS AQUEUSES DURCISSABLES PHYSIQUEMENT, THERMIQUEMENT, OU THERMIQUEMENT ET AVEC RAYONNEMENT ACTINIQUE, ET LEURS PRODUITS DERIVES, AINSI QUE LEUR PROCEDE DE FABRICATION

(30) Priorität: 02.02.2000 DE 10004487
(43) Veröffentlichungstag der Anmeldung: 11.12.2002
(73) Patentinhaber: BASF Coatings Aktiengesellschaft, 48165 Münster (DE)
(72) Erfinder: SAPPER, Ekkehard, 97222 Rimpar (DE); HUPP, Anne, 97270 Kist (DE); WEGNER, Egon, 97209 Veitshöchheim (DE); VESPER, Willi, 97353 Wiesentheid (DE); JOSTEN, Karl-Heinz, 97209 Veitshöchheim (DE); SCHWARZ, Jörg, 49124 Georgsmarienhütte (DE)
(74) Vertreter: Fitzner, Ulrich
(86) Internationale Anmeldenummer: PCT/EP2001/001086
(87) Internationale Veröffentlichungsnummer: WO 2001/057105

(56) Entgegenhaltungen:
- EP-A- 0 731 148
- DE-A- 19 816 362
- US-A- 3 996 154

## Beschreibung

Die vorliegende Erfindung betrifft ein neues Verfahren zur Herstellung von wässrigen Beschichtungsstoffen, Klebstoffen und Dichtungsmassen aus Rheologiehilfsmittel auf der Basis von Harnstoffurethanen enthaltenden, physikalisch, thermisch oder thermisch und mit aktinischer Strahlung härtbaren, wässrigen oder wässrig/organischen Zusammensetzungen. Des Weiteren betrifft die vorliegende Erfindung neue Beschichtungen, Klebschichten und Dichtungen, die mit Hilfe der neuen Beschichtungsstoffe, Klebstoffe und Dichtungsmassen, die mit dem neuen Verfahren hergestellt werden, erhältlich sind.

Thermisch härtbare wässrige Beschichtungsstoffe, welche ein Vernetzungsmittel und ein gesättigtes, ungesättigtes und/oder mit olefinisch ungesättigten Verbindungen gepfropftes, ionisch und/oder nichtionisch stabilisiertes Polyurethan auf Basis aliphatischer, cycloaliphatischer, aliphatisch-cycloaliphatischer, aromatischer, aliphatisch-aromatischer und/oder cycloaliphatisch-aromatischer Polyisocanate enthalten, sowie die entsprechenden Lackierungen sind beispielsweise aus den Patentschriften EP-A-0 089 497, DE-C-197 22 862 oder DE-A-196 45 761 bekannt. Sie werden üblicherweise als Wasserbasislacke bezeichnet. Die für die Lagerung und die Anwendung dieser bekannten Wasserbasislacke notwendigen speziellen rheologischen Eigenschaften wie Viskosität, Pseudoplastizität und Thixotropie werden durch die Verwendung eines anorganischen Schichtsilikats vom Montmorrillonit-Typ eingestellt. Deren Verwendung ist erforderlich, um dem Wasserbasislack seine bekanntermaßen guten anwendungstechnischen Eigenschaften wie beispielsweise gute Zerstäubbarkeit, gute Standfestigkeit sowie im Falle effektgebender Wasserbasislacke einen sehr guten Metallic-Effekt, d.h. einen sehr stark ausgeprägten FlipFlop-Effekt, zu verleihen. Außerdem ist es notwendig, bei der Herstellung der bekannten Wasserbasislacke nach jeder Zugabe eines Bestandteils einen Homogenisierungsschritt einzuschalten, was die Produktion vergleichsweise komplex macht.

Leider können die anorganischen Schichtsilikate die gewünschten rheologischen Eigenschaften nicht immer und unter allen Umständen zuverlässig vermitteln. So kommt es vor, dass die ursprünglich eingestellte Viskosität der hiermit ausgerüsteten Wasserbasislacke bei der Lagerung oder bei der Anwendung beim Kunden stark absinkt, so dass sich die Standfestigkeit verringert und insbesondere der Metallic-Effekt sich bei den betreffenden Wasserbasislackierungen nachteilig verändert.

Dieses Phänomen, das in der Praxis große Probleme bereiten kann, ist in seinen Ursachen noch nicht vollständig aufgeklärt. Es wird angenommen, dass es mit dem Mechanismus des Rheologieaufbaus beim Montmorrillonit über Dipole innerhalb seiner Molekülstruktur zusammenhängt. Hier wirken sich ionische Materialien und Materialien, die starke elektrische Felder aufweisen, bespielsweise dreiwertige Eisenionen, die einen besonders kleinen Ionenradius haben, ausgesprochen schädlich aus. Solche Eisenionen werden beispielsweise durch Pigmente in die Wasserbasislacke eingetragen. Auch Tenside und Moleküle mit starken Dipolen können sich nachteilig bemerkbar machen.

Andere Rheologiehilfsmittel wie Verdicker auf der Basis von Polyurethanen oder Polyacrylaten (vgl. Römpp Lexikon Lacke und Druckfarben, Georg Thieme Verlag, Stuttgart, New York, »Verdickungsmittel«, Seiten 599 bis 600,) weisen zwar diese Nachteile nicht auf. Dafür haben sie andere Nachteile, die ihre Verwendung in den Wasserbasislacken verhindern. Diese Nachteile sind insbesondere ein zu schwach ausgeprägter rheologischer Effekt und eine nicht vorhandene thixotrope Wirkung sowie eine zu geringe Standfestigkeit, eine zu schlechte Zerstäubbarkeit und eine zu hohe Empfindlichkeit gegen eine Senkung des ph-Werts der betreffenden Wasserbasislacke.

Ein weiterer Nachteil der anorganischen Schichtsilikate ist, dass sie sich manchmal negativ auf die Stabilität im Wasserbasislack eingesetzten Aluminiumeffektpigmente auswirken, so dass sie bei ungenügender Passivierung zu gasen beginnen. Im allgemeinen kann man dem in gewissem Umfang durch eine Chromatierung der Oberfläche der Aluminiumeffektpigmente abhelfen, indes ist die Chromatierung ökologisch nicht ganz unbedenklich und wird von den Anwendern zunehmend abgelehnt.

Ein weiterer wesentlicher Nachteil der anorganischen Schichtsilikate liegt darin, dass sie ausschließlich in wässrigen Systemen angewandt werden können. Versetzt man damit hergestellte Wasserbasislacke mit größeren Anteilen an wassermischbaren organischen Lösemitteln, kommt es zu Schlieren, Phasenbildung und Flokkulation. Diese nachteiligen Eigenschaften machen es beispielsweise unmöglich, Geräte und Behälter, die mit den betreffenden Wasserbasislacken in Berührung gekommen sind, mit den üblichen und bekannten kostengünstigen Spülverdünnungen zu reinigen, so dass spezielle Spülflüssigeiten wie Gemische aus Wasser, Propanol und Butylenglykol verwendet werden müssen.

Ein weiterer Nachteil der bekannten Wasserbasislacke ist, dass sie in mehreren Stufen hergestellt werden müssen, wobei es für den Verfahrenserfolg in hohem Maße darauf ankommt, in welcher Reihenfolge die Bestandteile eingearbeitet werden. Außerdem können häufig keine Konzentrate mit hohen Festkörpergehalten hergestellt werden, was für die Lagerung und den Transport nachteilig ist.

Probleme der Rheologie und Thixotropie treten indes auch in pigmentfreien wässrigen Klarlacken auf.

Klarlacke dienen der Herstellung von Klarlackierungen und werden häufig zusammen mit Wasserbasislacken im Rahmen des Nass-in-Nass-Verfahrens zur Herstellung farb-und/oder effektgebender Mehrschichtlackierungen auf grundierten und ungrundierten Substraten angewandt. Bei diesem Verfahren werden bekanntermaßen Basislackschichten auf die Substrate appliziert und hiernach getrocknet, indes nicht ausgehärtet. Die Basislackschichten werden danach mit Klarlackschichten überschichtet, wonach beide Schichten gemeinsam ausgehärtet werden.

Übliche und bekannte wässrige Klarlacke sind thermisch und/oder mit aktinischer Strahlung härtbare Einkomponenten(1K)-, Zweikomponenten(2K)- oder Mehrkomponenten(3K, 4K)-Klarlacke.

Wässrige Einkomponenten(1K)-Klarlacke enthalten insbesondere hydroxylgruppenhaltige, in Wasser lösliche und/oder dispergierbare Bindemittel sowie Vernetzungsmittel wie blockierte Polyisocyanate, Tris(alkoxycarbonylamino)triazine und/oder Aminoplastharze.

Wässrige Zweikomponenten(2K)- oder Mehrkomponenten(3K, 4K)-Klarlacke, wie sie beispielsweise in der europäischen Patentschrift EP-A-0 654 052 (internationale Patentanmeldung WO 94/03512) beschrieben werden, enthalten bekanntermaßen in Wasser lösliche und/oder dispergierbare, isocanatreaktive funktionelle Gruppen, insbesondere Hydroxylgruppen, enthaltende Bindemittel sowie Polyisocyanate als Vernetzungsmittel, die beide bis zu ihrer Verwendung getrennt voneinander gelagert werden.

Es sind auch siloxanhaltige Klarlacke bekannt, die durch Umsetzung von hydrolysierbaren Siliciumverbindungen mit Wasser oder Wasser abspaltenden Mitteln hergestellt werden können und die zur Verbesserung bestimmter Eigenschaften organische Bestandteile enthalten. Diese werden beispielsweise unter der Marke ORMOCER® (organically modified ceramic) vertrieben. Eine allgemeine Beschreibung von solchen Systemen findet sich beispielsweise in dem Artikel von Bruce M. Novak, "Hybrid Nanocomposite Materials-Between Inorganic Glasses and Organic Polymers", in Advanced Materials, 1993, 5, Nr.6, S. 422-433, oder in dem Vortrag von R. Kasemann, H. Schmidt, 15. International Conference, International Centre for Coatings Technology, Paper 7, "Coatings for mechanical and chemical protection based on organic-inorganic Sol-Gel Nanocomposites", 1993.

Um die im Einzelfall gewünschten rheologischen und thixotropen Eigenschaften der wässrigen Klarlacke einzustellen, wird eine Vielzahl von Rheologiehilfsmitteln angewandt, wie beispielsweise die aus Römpp Lexikon Lacke und Druckfarben, Georg Thieme Verlag, Stuttgart, New York, 1998, »Verdickungsmittel«, Seiten 599 bis 600, und dem Lehrbuch »Lackadditive« von Johan Bieleman, Wiley-VCH, Weinheim, New York, 1998, Seiten 51 bis 59 und 65, bekannten Assoziatiwerdicker auf Polyurethanbasis. Die bisher bekannten Verdicker sind jedoch nicht ohne weiteres in jedem wässrigen Klarlack, d.h. universell, verwendbar, sonder müssen sehr sorgfältig ausgewählt und auf den jeweiligen Einzelfall abgestimmt werden.

Rheologiehilfsmittel auf der Basis von Harnstoffurethanen sind bekannt und im Markt erhältlich. Sie sind aufgebaut aus Diaminen, Diisocyanaten und Polyalkylenglykolmonoalkylethern als Blockierungsmittel für die Isocyanatgruppen und werden üblicherweise in wassermischbaren Lösemitteln gelöst angewandt. Eine Verwendung in wässrigen Zusammensetzungen, insbesondere in wässrigen, physikalisch, thermisch oder thermisch und mit aktinischer Strahlung härtbaren Beschichtungsstoffen, Klebstoffen und Dichtungsmassen war bislang nicht möglich.

Aus der deutschen Patentanmeldung DE 183 16 362 Alsind Hamstoffurethanderivate bekannt, die zur Beschichtung von Siliziumdioxid bestimmter Teilchengrößen dienen. Die beschichteten Siliziumdioxidteilchen wiederum werden als Mattierungsmittel für wässrige Beschichtungen, Farben oder Lacke verwendet.

Der vorliegenden Erfindung lag die Aufgabe zugrunde, die bekannten Rheologiehilfsmittel auf der Basis von Harnstoffurethanen neuen Anwendungsgebieten, insbesondere in wässrigen Beschichtungsstoffen, Klebstoffen und Dichtungsmassen, zuzuführen, ohne dass hierbei die vorstehend beschriebenen Nachteile des Standes der Technik auftreten.

Außerdem lag der vorliegenden Erfindung die Aufgabe zugrunde, eine neue physikalisch, thermisch oder thermisch und mit aktischer Strahlung härtbare wässrige Zusammensetzung zu finden, die die Nachteile des Standes der Technik nicht mehr länger aufweist, sondern die sich in einfacher Weise in einem Verfahrenschritt herstellen läßt, wobei es auf die Reihenfolge der Zugabe der Bestandteile nicht oder nur in geringem Umfang ankommt, als Konzentrat selbst mit einem Festkörpergehalt von mehr als 40 Gew.-% lager- und transportstabil ist, ausgesprochen stabile pseudoplastische und thixotrope Eigenschften aufweist, die auch von dreiwertigen Eisenionen, starken Dipole und/oder starken elektrischen Feldern nicht negativ beeinflußt werden, und die sich problemlos zu wässrigen und konventionellen Beschichtungsstoffen, Klebstoffen und Dichtungsmassen verarbeiten lassen, die physikalisch thermisch oder thermisch und mit aktinischer Strahlung härtbar sind.

Insbesondere lag der vorliegenden Erfindung die Aufgabe zugrunde, ein neues Verfahren zur Herstellung von Rheologiehilfsmittel auf der Basis von Harnstoffurethanen enthaltenden, physikalisch, thermisch oder thermisch und mit aktinischer Strahlung härtbaren, wässrigen Zusammensetzungen, insbesondere von wässrigen Beschichtungsstoffen, Klebstoffen und Dichtungsmassen, zu finden.

Demgemäß wurde das neue Verfahren zur Herstellung wässriger Beschichtungsstoffe, Klebstoffe und Dichtungsmassen gefunden, bei dem man
(1) eine wasserhaltige oder wasserfreie physikalisch, thermisch und thermisch und mit aktinischer Strahlung härtbare Zusammensetzung, enthaltend mindestens eine Harnstoff- und Urethangruppen aufweisende Verbindung der allgemeinen Formel I:

   **X[NH-C(=O)-NH-Y-NH-C(=O)-OR]**_{**2**} **(I),**

   worin die Variablen die folgende Bedeutung haben:
   - R: gleiche oder voneinander verschiedene Poly(alkylenether)reste;
   - X: zweiwertiger substituierter oder unsubstituierter Arylenrest;
   - Y: gleiche zweiwertige, substituierte oder unsubstituierte Arylenreste, die gleich dem Rest X oder hiervon verschieden sind, oder
   voneinander verschiedene zweiwertige, substituierte oder unsubstituierte Arylenreste, von denen keiner oder einer gleich dem Rest X ist;
   aus ihren Bestandteilen durch Vermischen herstellt und
(2) die resultierende Zusammensetzung mit Wasser oder mit mindestens einem organischen Lösemittel oder einer Mischung aus mindestens einem Lösemittel und Wasser verdünnt.

Im Folgenden werden das neue Verfahren zur Herstellung wässriger Beschichtungsstoffe, Klebstoffe und Dichtungsmassen als "erfindungsgemäße Verfahren" bezeichnet.

Ferner wurden die neuen Beschichtungen, Klebschichten und Dichtungen auf und in grundierten und ungrundierten Substraten gefunden, die aus den Zusammensetzungen, die nach dem erfindungsgemäßen Verfahren herstellbar sind, erhältlich sind und die im folgenden als "erfindungsgemäße Beschichtungen, Klebschichten oder Dichtungen" bezeichnet werden.

Nicht zuletzt wurden die neuen grundierten und ungrundierten Substrate gefunden, die mindestens eine erfindungsgemäße Beschichtung, Klebschicht und/oder Dichtung aufweisen und die im Folgenden als "erfindungsgemäße Substrate" bezeichnet werden.

Weitere erfindungsgemäße Gegenstände gehen aus der nachfolgenden Beschreibung hervor.

Im Hinblick auf den Stand der Technik war es überraschend und für den Fachmann nicht vorhersehbar, dass die der vorliegenden Erfindung zugrunde liegende Aufgabe mit Hilfe der speziell ausgewählten erfindungsgemäß zu verwendenden Verbindungen I gelöst werden konnte. Denn eher stand es zu erwarten, dass erst eine aufwendige Variation der Bindemittelbasis die erfindungsgemäßen Effekte hervorruft. So aber konnte über die vergleichsweise sehr viel einfachere Variation der Rheologiehilfsmittel dieses Ziel erreicht werden, wobei die resultierenden erfindungsgemäßen Zusammensetzungen überraschend breit anwendbar sind und sich für die Herstellung wässriger Systeme hervorragend eignen. Dies war insbesondere im Hinblick auf die Tatsache überraschend, dass die erfindungsgemäß zu verwendenden Verbindungen I bislang nicht für eine Verwendung in wässrigen Systemen in Betracht gezogen worden waren.

Die nach dem erfindungsgemäßen Verfahren hergestellte Zusammensetzung ist physikalisch härtend. Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Die nach dem erfindungsgemäßen Verfahren hergestellte Zusammensetzung kann auch thermisch härtend sein. Hierbei kann sie selbstvernetzend oder fremdvernetzend sein. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind. Als fremdvernetzend werden dagegen solche erfindungsgemäße Zusammensetzungen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag Stuttgart, New York, 1998, »Härtung«, Seiten 274 bis 276, insbesondere Seite 275, unten, verwiesen.

Die nach dem erfindungsgemäßen Verfahren hergestellte Zusammensetzung ist des Weiteren thermisch und mit aktinischer Strahlung härtbar, was von der Fachwelt auch als "Dual Cure" bezeichnet wird. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die nach dem erfindungsgemäßen Verfahren hergestellte Zusammensetzung ist wässrig. Dies bedeutet, dass ihre Bestandteile in Wasser oder in einer Mischung, die aus Wasser und untergeordneten Mengen mindestens eines wassermischbaren organischen Lösemittels besteht, gelöst und/oder dispergiert vorliegen. Hierbei sind unter "untergeordneten Mengen" solche Mengen zu verstehen, die die wässrige Natur der Mischung nicht zerstören.

Der erfindungswesentliche Bestandteil der nach dem erfindungsgemäßen Verfahren hergestellte Zusammensetzung ist die Harnstoff- und Urethangruppen aufweisende Verbindung I der vorstehend beschriebenen allgemeinen Formel I.

In der allgemeinen Formel I steht die Variable R für gleiche oder voneinander verschiedene Poly(alkylenether)reste. Erfindungsgemäß ist es von Vorteil, wenn gleiche Poly(alkylenether)reste R verwendet werden. Des Weiteren ist es von Vorteil, wenn hydrophile Poly(alkylenether)reste R eingesetzt werden.

Im Rahmen der vorliegenden Erfindung ist unter der Eigenschaft hydrophil die konstitutionelle Eigenschaft eines Moleküls oder einer funktionellen Gruppe zu verstehen, in die wässrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wässrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Vorteilhafte hydrophile Poly(alkylenether)reste R sind solche der allgemeinen Formel II:

**-(-R**^{**1**}**-O-)**_{**n**}**-R**^{**2**} **(II),**

worin der Index und die Variablen die folgende Bedeutung haben:

| | | |
|---|---|---|
| n | = | 2 bis 10, Vorzugsweise 2 bis 8, bevorzugt 2 bis 6 und insbesondere 3 bis 5; |
| R¹ | = | Alkandiylrest mit 2 bis 4 Kohlenstoffatomen; und |

| | | |
|---|---|---|
| R ² | = | Alkylrest mit 1 bis 6 Kohlenstoffatomen oder Cycloalkylrest mit 4 bis 7 Kohlenstoffatomen. |

Beispiele geeigneter Alkandiylreste R¹ sind Ethan-1,2-diyl-, Propan-1,2-diyl-, Propan-1,3-diyl-, Butan-1,2-diyl-, Butan-1,3-diyl- oder Butan-1,4-diylreste, von denen die Ethan-1,2-diylreste von besonderem Vorteil sind und deshalb erfindungsgemäß besonders bevorzugt verwendet werden.

Beispiele geeigneter Alkylreste R² sind Methyl-, Ethyl-, Propyl-, Butyl-, Pentyl-, Hexyl-oder Heptylreste, insbesondere Butylreste.

Beispiele geeigneter Cycloalkylreste R² sind Cyclobutyl-, Cyclopentyl-, Cyclohexyl- oder Cyclohexylreste.

Erfindungsgemäß sind die Alkylreste R² von Vorteil und werden deshalb bevorzugt verwendet.

Beispiele besonders gut geeigneter Poly(alkylenether)reste R sind Triethylenglykol-, Tetraethylenglykol- oder Pentaethylenglykolmonobutyletherreste, von denen der Triethylenglykolmonobutyletherrest ganz besonders vorteilhaft ist und deshalb erfindungsgemäß ganz besonders bevorzugt verwendet wird.

In der allgemeinen Formel I stehen die Variablen X und Y für zweiwertige substituierte oder unsubstituierte Arylenreste.

In einer gegebenen erfindungsgemäß zu verwendenden Verbindung I können gleiche Arylenreste Y verwendet werden. Hierbei können die Arylenreste Y gleich dem Arylenrest X oder hiervon verschieden sein. Erfindungsgemäß ist es von Vorteil, wenn die Arylenreste Y von dem Arylenrest X verschieden sind.

Außerdem können in einer gegebenen erfindungsgemäß zu verwendenden Verbindung I voneinander verschiedene Arylenreste Y verwendet werden. Hierbei kann ein oder kein Arylenrest Y gleich dem Arylenrest X sein. Erfindungsgemäß ist es auch hiervon Vorteil, wenn kein Arylenrest Y gleich dem Arylenreste X ist.

Erfindungsgemäß ist es von Vorteil, wenn in einer gegebenen erfindungsgemäß zu verwendenden Verbindung I die ArylenresteY gleich sind.

Beispiele geeigneter Arylenreste X und Y sind Phen-1,2 -, -1,3- oder -1,4-ylenreste, Naphth-1,2-, -1,3-, -1,4-, -1,5-, -1,6-, -1,7-, -1,8- oder -2,3-ylenreste, Biphenyl-4,4'-, -4,3'-, -4,2'-, -3,3'- oder -2,2'-ylenreste, Methan-diphenyl-4,4'-, -4,3'-, -4,2'-, -3,3'- oder -2,2'-ylenreste, Ethan-1,1-diphenyl-4,4'-, -4,3'-, -4,2'-, -3,3'- oder -2,2'-ylenreste oder Propan-2,2-diphenyl-4,4'-, -4,3'-, -4,2'-, -3,3'- oder -2,2'-ylenreste. Von diesen sind die Phenylenreste von Vorteil und werden deshalb bevorzugt verwendet.

Erfindungsgemäß sind die substituierten Arylenreste X und Y von besonderem Vorteil und werden deshalb besonders bevorzugt verwendet.

Als Substituenten können alle elektronenziehenden oder elektronenschiebenden Atome oder organischen Reste verwendet werden, die bei der Herstellung der erfindungsgemäß zu verwendenden Verbindungen I und/oder bei der Lagerung und der weiteren Verarbeitung der erfindungsgemäßen Zusammensetzungen und/oder bei der Lagerung und der Verwendung der erfindungsgemäßen Beschichtungsstoffe, Klebstoffe und Dichtungsmassen keine unerwünschten Nebenreaktionen ergeben. Der Fachmann kann daher geeignete Substituenten leicht anhand seines allgemeinen Fachwissens identifizieren.

Beispiele gut geeigneter Substitutienten sind Halogenatome, insbesondere Chlor und Fluor, Nitrilgruppen, Nitrogruppen, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste sowie partiell oder vollständig halogenierte, insbesondere chlorierte und/oder fluorierte Alkyl-, Cycloalkyl-, Alkylcycloalkyl-, Cycloalkylalkyl-, Aryl-, Alkylaryl-, Cycloalkylaryl-Arylalkyl- und Arylcycloalkylreste, insbesondere Alkylreste; Aryloxy-, Alkyloxy- und Cycloalkyloxyreste, insbesondere Phenoxy, Naphthoxy, Methoxy, Ethoxy, Propxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; tertiäre Aminogruppen, insbesondere N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino. Von diesen sind die Alkylreste von besonderem Vorteil und werden deshalb bevorzugt verwendet. Ganz besondere Vorteile resultieren aus der Verwendung von Methylresten.

Beispiele besonders bevorzugter Arylenreste X und Y sind daher methylsubstituierte Phenylenreste, die sich von Toluol, o-, m- oder p-Xylol oder ihren technischen Gemischen oder von sym.-Trimethylbenzol, Pseudocumol oder Hemellitol oder ihren technischen Gemischen ableiten, wie Tolu-2,3-, -2,4-, -2,5-, -2,6-, -3,4- oder-3,5-ylenreste, o-Xyl-3,4-, -3,5- oder -3,6-ylenreste, m-Xyl-2,4- oder -2,5-ylenreste, p-Xyl-2,3-, -2,5- oder -2,6-ylenreste, 1,3,4-Trimethyl-phen-1,4-ylenreste, 1,2,4-Trimethyl-phen-3,5-, -3,6- oder 5,6-ylenreste oder 1,2,3-Trimethyl-phen-4,5- oder -4,6-ylenreste. Von diesen bieten die methylsubstituierten Phenylenreste, die sich von Toluol ableiten, insbesondere die Tolu-2,4- und -2,6-ylenreste, sowie die methylsubstituierten Phenylenreste, die sich von den technischen Xylolgemischen ableiten, ganz besondere Vorteile und werden deshalb erfindungsgemäß ganz besonders bevorzugt verwendet. Weitere Vorteile resultieren, wenn sich die Arylenreste X von den technischen Xylolgemischen und die Arylenreste Y von Toluol ableiten.

Beispiele für ganz besonders bevorzugter erfindungsgemäß zu verwendende Verbindungen I sind die Verbindungen I-1 bis I-4 sowie deren Gemische.

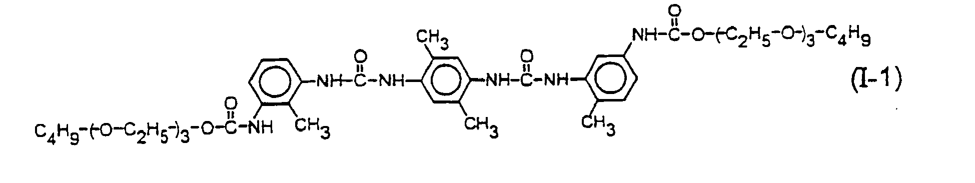

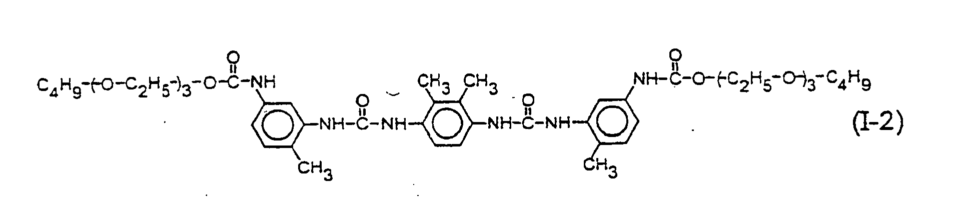

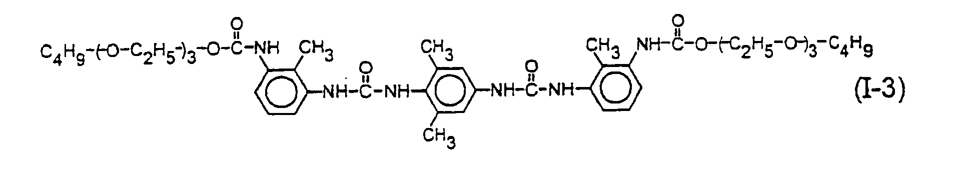

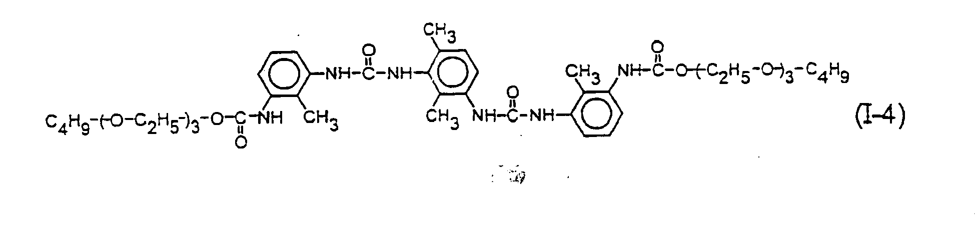

Methodisch gesehen bietet die Herstellung der erfindungsgemäß zu verwendenden Verbindungen I keine Besonderheiten, sondern erfolgt nach den üblichen und bekannten Methoden der organischen Isocyanatchemie aus geeigneten Ausgangsverbindungen gegebenenfalls unter Verwendung üblicher und bekannter Katalysatoren wie Dibutylzinnoxid oder Dibutylzinndilaurat, wobei die üblichen und bekannten Vorrichtungen zur Umsetzung von Polyisocyanaten sowie die entsprechenden Vorsichtsmaßnahmen angewandt werden.

Geeignete Ausgangsverbindungen X für die Einführung der vorstehend beschriebenen Arylenreste X sind die entsprechenden Arylendiamine, insbesondere die Xylylendiamine.

Geeignete Ausgangsverbindungen Y für die Einführung der vorstehend beschriebenen Arylenreste X sind die entsprechenden Arylendiisocyanate, insbesondere die Toluylendiisocyanate.

Geeignete Ausgangsverbindungen R für die Einführung der vorstehend beschriebenen Poly(alkylenether)reste sind die entsprechenden Poly(alkylenglykol)monoalkylether odermonocycloalkylether, insbesondere Triethylenglykolmonobutylether.

Vorzugsweise werden die Ausgangsverbindungen X, Y und R im Molverhältnis von (0,8 bis 1,2) : (1,8 bis 2,2) : (1,9 bis 2,3) und insbesondere 1,0 : 2,0 : 2,0 miteinander umgesetzt.

Der Gehalt der erfindungsgemäßen Zusammensetzungen an den erfindungsgemäß zu verwendenden Verbindungen I kann sehr breit variieren. Nach unten ist der Gehalt durch die Mindestmenge an erfindungsgemäß zu verwendender Verbindung I, die die gewünschten technischen Effekte gerade noch hervorruft, begrenzt. Nach oben ist er durch die sich einstellende Viskosität der erfindungsgemäßen Zusammensetzung begrenzt. So wird man im Allgemeinen den Gehalt so wählen, dass die erfindungsgemäße Zusammensetzung nicht zu viskos für eine Handhabung wird. Vorzugsweise liegt der Gehalt bei, jeweils bezogen auf die Zusammensetzung, 0,1 bis 10, bevorzugt 0,2 bis 8, besonders bevorzugt 0,3 bis 6, ganz besonders bevorzugt 0,4 bis 4 und insbesondere 0,5 bis 3 Gew.-%.

Die erfindungsgemäß zu verwendende Verbindung I kann in hundertprozentiger Form eingesetzt werden. Erfindungsgemäß ist es von Vorteil, sie in Lösungen in mindestens einem organischen Lösemittel, insbesondere einem wassermischbaren organischen Lösemittel wie N-Methylpyrrolidon einzusetzen. Vorzugsweise werden hierbei Festkörpergehalte von 10 bis 80 und insbesondere 30 bis 70 Gew.-% angewandt.

Die nach dem erfindungsgemäßen Verfahren hergestellte Zusammensetzung enthält des weiteren Bestandteile, wie sie für physikalisch, thermisch oder thermisch und mit aktinischer Strahlung härtbare Beschichtungsstoffe, Klebstoffe und Dichtungsmassen üblich und bekannt sind.

Ein anwendungstechnisch besonders wesentlicher weiterer Bestandteil ist mindestens ein Bindemittel, welches im Wesentlichen die erfindungsgemäßen Zusammensetzungen physikalisch, thermisch oder thermisch mit aktinischer Strahlung härtbar macht.

Beispiele geeigneter Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele geeigneter Bindemittel der vorstehend genannten Art für physikalisch oder thermisch, insbesondere thermisch härtbare, Zusammensetzungen sind Poly(meth)acrylate oder Acrylatcopolymerisate, insbesondere die in der Patentschrift DE-A-197 36 535 oder DE-A-197 41 554 beschriebenen; Polyester, insbesondere die in den Patentschriften DE-A-40 09 858 oder DE-A-44 37 535 beschriebenen; Alkyde, acrylierte Polyester, Polylactone, Polycarbonate, Polyether, Epoxidharz-Amin-Addukte, (Meth)Acrylatdiole, partiell verseifte Polyvinylester, Polyharnstoffe oder Polyurethane von denen die Polyurethane, die Acrylatcopolymerisate und/oder die Polyester besonders vorteilhaft und die Polyurethane ganz besonders vorteilhaft sind.

Diese Bindemittel enthalten reaktive funktionelle Gruppen, die mit komplementären reaktiven funktionellen Gruppen in den Bindemitteln selbst (Selbstvernetzung) oder in Vernetzungsmitteln (Fremdvernetzung) enthalten sind.

Beispiele geeigneter erfindungsgemäß zu verwendender komplementärer reaktiver funktioneller Gruppen, welche Vemetzungsreaktionen eingehen, sind in der folgenden Übersicht zusammengestellt. In der Übersicht steht die Variable R³ für einen acyclischen oder cyclischen aliphatischen, einen aromatischen und/oder einen aromatisch-aliphatischen (araliphatischen) Rest; die Variablen R⁴ und R⁵ stehen für gleiche oder verschiedene aliphatische Reste oder sind miteinander zu einem aliphatischen oder heteroaliphatischen Ring verknüpft.

### Übersicht: Beispiele komplementärer funktioneller Gruppen im

| **Bindemittel** | **und** | **Vernetzungsmittel** |
|---|---|---|
| | **oder** | |
| **Vernetzungsmittel** | **und** | **Bindemittel** |
| -SH | | -C(O)-OH |
| -NH₂ | | -C(O)-O-C(O)- |
| -OH | | -NCO |
| -O-(CO)-NH-(CO)-NH₂ | | -NH-C(O)-OR³ |
| -O-(CO)-NH₂ | | -CH₂-OH |
| | | -CH₂-O-CH₃ |
| | | -NH-C(O)-CH(-C(O)OR³)₂ |
| | | -NH-C(O)-CH(-C(O)OR³)(-C(O)-R³) |
| | | -NH-C(O)-NR⁴R⁵ |
| | | = Si(OR³)₂ |
| | | O |
| | | -CH-CH₂ |
| | | O |
| | | C |
| | | O O |
| | | -CH-CH₂ |
| | -C(O)-OH | O |
| | | -CH-CH₂ |
| | -O-C(O)-CR³=_{CH2} | -OH |
| | -O-CR³=CH₂ | -NH₂ |
| | | -C(O)-CH₂-C(O)-R³ |
| | | -CH=CH₂ |

Die Auswahl der jeweiligen komplementären Gruppen richtet sich zum einen danach, dass sie bei der Lagerung keine unerwünschten Reaktionen eingehen und/oder bei Dual Cure die Härtung mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100 °C, insbesondere 80 °C nicht überschreitet. Im Hinblick auf diese Rahmenbedingungen haben sich Hydroxylgruppen und Isocyanatgruppen oder Carboxylgruppen und Epoxygruppen als komplementäre funktionelle Gruppen als vorteilhaft erwiesen, weswegen sie in den erfindungsgemäßen Beschichtungsstoffen, Klebstoffen und Dichtungsmassen, welche als Zwei- oder Mehrkomponentensysteme vorliegen, erfindungsgemäß bevorzugt angewandt werden. Besondere Vorteile resultieren hier, wenn die Hydroxylgruppen als reaktive funktionelle Gruppen und die Isocyanatgruppen als komplementäre reaktive funktionelle Gruppen verwendet werden.

Können höhere Vemetzungstemperaturen, beispielsweise von 100 °C bis 180 °C, angewandt werden, kommen als erfindungsgemäße Beschichtungsstoffe, Klebstoffe und Dichtungsmassen, auch Einkomponentensysteme in Betracht, worin die reaktiven funktionellen Gruppen vorzugsweise Thio-, Amino-, Hydroxyl-, Carbamat-, Allophanat-, Carboxy-, und/oder (Meth)acrylatgruppen, insbesondere aber Hydroxylgruppen, und die komplementären reaktiven funktionellen Gruppen vorzugsweise Anhydrid-, Carboxy-, Epoxy-, blockierte Isocyanat-, Urethan-, Methylol-, Methylolether-, Siloxan-, Amino-, Hydroxy- und/oder beta-Hydroxyalkylamidgruppen, insbesondere aber blockierte Isocyanat-, Urethan-, Methylol- oder Methylolethergruppen, sind.

Sollen die erfindungsgemäßen Zusammensetzungen nicht nur thermisch sondern auch mit aktinischer Strahlung härtbar sein (Dual Cure), enthalten sie darüber hinaus noch übliche und bekannte Bindemittel, die mit aktinischer Strahlung aktivierbar sind. Beispiele geeigneter Bindemittel, die mit aktinischer Strahlung aktivierbar sind, sind (meth)acryl-, allyl-, vinyl- oder dicyclopentadienylfunktionelle (Meth)Acrylatcopolymere oder Polyetheracrylate, Polyesteracrylate, ungesättigte Polyesteracrylate, Epoxyacrylate, Urethanacrylate, Aminoacrylate, Melaminacrylate, Silikonacrylate oder die entsprechenden Methacrylate. Es können indes auch Bindemittel angewandt werden, die mit aktinischer Strahlung aktivierbare funktionelle Gruppen und reaktive funktionelle Gruppen, die thermische Vemetzungsreaktionen eingehen können, enthalten.

Beispiele für die ganz besonders bevorzugt eingesetzten Polyurethane sind gesättigte, ungesättigte und/oder mit olefinisch ungesättigten Verbindungen gepfropfte, ionisch und/oder nichtionisch stabilisierte Polyurethane.

Vorteilhafterweise weisen die Polyurethane je nach Art der Stabilisierung eine Säurezahl oder Aminzahl von 10 bis 250 mg KOH/g (ionische Stabilisierung oder nichtionische plus ionische Stabilisierung) oder von 0 bis 10 mg KOH/g (nichtionische Stabilisierung), eine OH-Zahl von 30 bis 350 mg KOH/g und ein zahlenmittleres Molekulargewicht von 1.500 bis 55.000 Dalton auf.

Die Polyurethane können in beliebiger Weise hergestellt werden. Vorzugsweise sind sie erhältlich, indem man in einem ersten Verfahrensschritt ein Polyurethanpräpolymer, das mindestens eine freie Isocyanatgruppe enthält, herstellt.

Das Polyurethanpräpolymer ist linear, verzweigt oder kammartig, insbesondere aber linear, aufgebaut. Hierbei enthält das lineare Polyurethanpräpolymer vorzugsweise zwei freie Isocyanatgruppen, insbesondere zwei endständige freie Isocyanatgruppen. Die verzweigten oder kammartig aufgebauten Polyurethanpräpolymere enthalten vorzugsweise mindestens zwei, insbesondere mehr als zwei freie Isocyanatgruppen, wobei endständige freie Isocyanatgruppen bevorzugt sind.

Methodisch gesehen weist die Herstellung der erfindungsgemäß zu verwendenden Polyurethanpräpolymere keine Besonderheiten auf, sondern erfolgt beispielsweise wie in den Patentschriften EP-A-0 089 497, DE-C-197 22 862, DE-A-196 45 761, EP-A-0 522 419 oder EP-A-0 522 420 beschrieben, durch Umsetzung mindestens eines Polyisocyanats, insbesondere eines Diisocyanats, mit mindestens einem Polyol, insbesondere einem Diol, wobei die Isocyanatkomponente im molaren Überschuß angewandt wird, so dass endständige freie Isocyanatgruppen resultieren.

Vorzugsweise werden für die Herstellung der Polyurethanpräpolymere Diisocyanate sowie gegebenenfalls in untergeordneten Mengen Polyisocyanate zur Einführung von Verzweigungen verwendet. Im Rahmen der vorliegenden Erfindung sind unter untergeordneten Mengen Mengen zu verstehen, die kein Gelieren der Polyurethanpräpolymere bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-( 4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentschriften DE-A-44 14 032, GB-A-1220717, DE-A-16 18 795 oder DE-A-17 93 785 beschrieben wird; Tetramethylxylylidendiisocyanat (TMXDI® der Firma CYTEC), Toluylendiisocyanat, Xylylendiisocyanat, Bisphenylendiisocyanat, Naphthylendiisocyanat oder Diphenylmethandiisocyanat.

Beispiele geeigneter Polyisocyanate auf Basis der vorstehend beschriebenen Diisocyanate sind isocyanatgruppenhaltige Polyurethanpräpolymere, die durch Reaktion von Polyolen mit einem Überschuß an mindestens einem der vorstehend beschriebenen Diisocyanate hergestellt worden sind, und/oder Isocyanurat-, Biuret-, Allophanat-, Iminooxadiazindon-, Urethan-, Harnstoff- und/oder Uretdiongruppen enthaltende Polyisocyanate. Bevorzugt werden Polyisocyanate verwendet, die im statistischen Mittel 2,5 bis 5 Isocyanatgruppen pro Molekül und Viskositäten von 100 bis 10.000, vorzugsweise 100 bis 5000 mPas aufweisen. Außerdem können die Polyisocyanate in üblicher und bekannter Weise hydrophil oder hydrophob modifiziert sein.

Ganz besonders bevorzugt werden Gemische aus Uretdion- und/oder Isocyanuratgruppen und/oder Allophanatgruppen aufweisenden Polyisocyanaten auf Basis der vorstehend beschriebenen Diisocyanate, wie sie durch katalytische Oligomerisierung von Diisocyanaten unter Verwendung von geeigneten Katalysatoren entstehen, eingesetzt.

Beispiele geeigneter Monoisocyanate sind Phenylisocyanat, Cyclohexylisocyanat oder Stearylisocyanat oder Vinylisocyanat, Methacryloylisocyanat und/oder 1-(1-Isocyanato-1-methylethyl)-3-(1-methylethenyl)-benzol (TMI® der Firma CYTEC),

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen, hergestellt werden.

Beispiele für geeigente Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die veresterungsfähigen Derivate der oben genannten Polycarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der oben genannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole2-Butyl-2-ethylpropandiol-1,3, 2-Butyl-2-methylpropandiol- 1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bi-cyclo[2.2.1]heptan, 2,2-Diethylpro-pandiol-1,3, 2,2-Dipropylpropandiol-1,3, 2-Cyclohexyl-2-methylpropandiol-1,3 2,5-Dimethyl-hexandiol-2,5 , 2,5-Diethylhexandiol-2,5, 2-Ethyl-5-methylhexandiol-2,5, 2,4-Dimethylpentandiol-2,4, 2,3-Dimethylbutandiol-2,3, 1,4-Bis(2'hydroxypropyl)-benzol oder 1,3-Bis(2'-hydroxypropyl)-benzol. Diese Diole können auch als solche für die Herstellung der Polyurethane eingesetzt werden.

Von diesen Diolen sind Hexandiol und Neopentylglykol besonders vorteilhaft und werden deshalb besonders bevorzugt verwendet.

Beispiele geeigneter Triole sind Trimethylolethan, Trimethylolpropan oder Glycerin, insbesondere Trimethylolpropan.

Die vorstehend genannten Triole können auch als solche für die Herstellung der erfindungsgemäß zu verwendenden Polyurethane (A) eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁶)ₘ- CH₂-O-)- aus. Hierbei ist der Index m bevorzugt 4 bis 6 und der Substitutent R⁶ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R⁶-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR⁷)ₒ-)ₚOH, wobei der Substituent R⁷ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten Polyurethane in Wasser anquellen. Andererseits können sie in Mengen verwendet werden, welche die nichtionische Stabilisierung der Polyurethane gewährleistet. Sie dienen dann als die nachstehend beschriebenen funktionellen nichtionischen Gruppen.

Das Polyurethan enthält entweder
- funktionelle Gruppen, die durch Neutralisationsmittel und/oder Quatemisierungsmittel in Kationen überführt werden können, und/oder kationische Gruppen, insbesondere Ammoniumgruppen,
   oder
- funktionelle Gruppen, die durch Neutralisationsmittel in Anionen überführt werden können, und/oder anionische Gruppen, insbesondere Carbonsäure- und/oder Carboxylatgruppen,
   und/oder
- nichtionische hydrophile Gruppen, insbesondere Poly(alkylenether)gruppen.

Beispiele geeigneter funktioneller Gruppen, die durch Neutralisationsmittel und/oder Quatemisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter funktioneller Gruppen, die durch Neutralisationsmittel in Anionen überführt werden können, sind Carbonsäure-, Sulfonsäure- oder Phosphonsäuregruppen, insbesondere Carbonsäuregruppen.

Beispiele geeigneter anionischer Gruppen sind Carboxylat-, Sulfonat- oder Phosphonatgruppen, insbesondere Carboxylatgruppen.

Beispiele geeigneter Neutralisationsmittel für in Kationen umwandelbare funktionelle Gruppen sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wässriger Phase erfolgen. Bevorzugt wird als Neutralisationsmittel Dimethylethanolamin eingesetzt.

Die insgesamt in den erfindungsgemäßen Zusamensetzungen eingesetzte Menge an Neutralisationsmittel wird so gewählt, dass 1 bis 100 Äquivalente, bevorzugt 50 bis 90 Äquivalente der potentiell kationischen oder anionischen funktionellen Gruppen des Polyurethans neutralisiert werden.

Von diesen funktionellen (potentiell) ionischen Gruppen und funktionellen nichtionischen Gruppen sind die (potentiell) anionischen Gruppen vorteilhaft und werden deshalb besonders bevorzugt verwendet.

Die Einführung von (potentiell) anionischen Gruppen in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am ###-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybernsteinsäure und Dihydroxybenzoesäure. Eine besonders bevorzugte Gruppe von Alkansäuren sind die ###, ###-Dimethylolalkansäuren der allgemeinen Formel R⁸-C(CH₂OH)₂COOH, wobei R⁸ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diamino-diphenylethersulfonsäure. Gegebenenfalls können auch Monohydroxy- und/oder Monomercaptocarbonsäuren wie Hydroxyessigsäure oder Thioglykolsäure mit verwendet werden.

Nichtionische stabilisierende Poly(oxyalkylen)gruppen bzw. Poly(alkylenether)gruppen können als laterale oder endständige Gruppen in die Polyurethanmoleküle eingeführt werden. Hierfür können beispielsweise Alkoxypoly(oxyalkylen)alkohole bzw.Poly(alkylenglykol)monoalkylether mit der allgemeinen Formel R⁹O-(-CH₂-CHR¹⁰⁻O-)ᵣ H in der R⁹ für einen Alkylrest mit 1 bis 6 Kohlenstoffatomen, R¹⁰ für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Der Einsatz von Polyolen, Polyaminen und Aminoalkoholen führt zur Molekulargewichtserhöhung der Polyurethane.

Geeignete Polyole für die Kettenverlängerung sind Polyole mit bis zu 20 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. Patentschriften EP-A-0 339 433, EP-A-0436 941,EP-A-0517 707).

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, dass keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin oder Diethanolamin.

Die Polyurethane können endständige und/oder laterale olefinisch ungesättigte Gruppen enthalten. Gruppen dieser Art können beispielsweise mit Hilfe von Verbindungen eingeführt werden, welche mindestens eine isocyanatreaktive Gruppe, insbesondere Hydroxylgruppe, und mindestens eine Vinylgruppe aufweisen. Beispiele geeigneter Verbindungen dieser Art sind Trimethylolpropanmonoallylether oder Trimethylolpropanmono(meth)acrylat.

Die Polyurethane können mit ethylenisch ungesättigten Verbindungen gepfropft werden. Beispiele geeigneter Polyurethane, welche als Pfropfmischpolymerisate vorliegen, sind aus den Patentschriften EP-A-0 521 928, EP-A-0 522 420, EP-A-0 522 419 oder EP-A-0 730 613 bekannt.

Der Anteil der Bindemittel, insbesondere der Polyurethane, an den erfindungsgemäßen Zusammensetzungen kann außerordentlich breit variieren und richtet sich in erster Linie nach dem Verwendungszweck der Zusammensetzungen und gegebenenfalls der Funktionalität der Bindemittel bezüglich der Vernetzungsreaktion mit den gegebenenfalls vorhandenen Vernetzungsmitteln. Erfindungsgemäß ist es Vorteil, die Bindemittel in einer Menge von, jeweils bezogen auf die Zusammensetzung, 2,0 bis 90, bevorzugt 3,0 bis 85, besonders bevorzugt 4,0 bis 80, ganz besonders bevorzugt 5,0 bis 75 und insbesondere 6,0 bis 70 Gew.-%, zu verwenden. Was die Polyurethane betrifft, ist es erfindungsgemäß von besonderem Vorteil, die Mengen, wie sie in den Patentschriften EP-A-0 089 497, DE-C-197 22 862, DE-A-196 45 761, EP-A-0 522 419 oder EP-A-0 522 420 beschrieben sind, zu verwenden.

Ein weiterer anwendungstechnischer wesentlicher Bestandteil der erfindungsgemäßen Zusammensetzungen ist mindestens ein farb- und/oder effektgebendes Pigment.

Die Pigmente können aus anorganischen oder organischen Verbindungen bestehen. Der erfindungsgemäße Beschichtungsstoff, insbesondere der erfindungsgemäße Wasserbasislack und Unidecklack, spez. der erfindungsgemäße Wasserbasislack, gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Vorzugsweise werden die Pigmente in Form von Pasten in die erfindungsgemäßen Zusammensetzungen eingearbeitet, wobei als Reibharze die vorstehend beschriebenen Bindemittel in Betracht kommen.

Der Anteil der Pigmente an dem erfindungsgemäßen Beschichtungsstoff kann außerordentlich breit variieren und richtet sich vor allem nach der Deckkraft der Pigmente, dem gewünschten Farbton und dem gewünschten optischen Effekt. Vorzugsweise sind die Pigmente in der erfindungsgemäßen Zusammensetzung in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf das Gesamtgewicht der Zusammensetzung, enthalten. Dabei kann auch das Pigment/Bindemittel Verhältnis, d. h. das Verhältnis der Pigmente zu den Bindemitteln, außerordentlich breit variieren. Vorzugsweise liegt dieses Verhältnis bei 6,0 : 1,0 bis 1,0 : 50, bevorzugt 5 : 1,0 bis 1,0 : 50, besonders bevorzugt 4,5 : 1,0 bis 1,0 : 40, ganz besonders bevorzugt 4 : 1,0 bis 1,0 : 30 und insbesondere 3,5 : 1,0 bis 1,0 : 25.

Die Verwendung dieser Pigmente entfällt, wenn die Zusammensetzungen für die Herstellung der erfindungsgemäßen Klarlacke oder der pigmentfreien erfindungsgemäßen Klebstoffe und Dichtungsmassen verwendet werden.

Noch ein weiterer anwendungstechnisch wesentlicher Bestandteil der Zusammensetzungen ist mindestens ein Vernetzungsmittel für die thermische Vernetzung oder Härtung. Seine Anwendung entfällt, wenn die erfindungsgemäßen Zusammensetzungen physikalisch härtend oder selbstvernetzend sind bzw. der Herstellung der entsprechenden erfindungsgemäßen Beschichtungsstoffe, Klebstoffe und Dichtungsmassen dienen.

Geeignete Vernetzungsmittel enthalten vorzugsweise die vorstehend beschriebenen komplementären Gruppen. Beispiele geeigneter Vernetzungsmittel sind Aminoplastharze wie Melaminharze oder Harnstoffharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden. Derartige Vernetzungsmittel sind dem Fachmann gut bekannt und werden von zahlreichen Firmen als Verkaufsprodukte angeboten.

Je nach Reaktivität des weiteren Vernetzungsmittels kann es den Zusammensetzungen direkt zugesetzt werden, wodurch ein sogenanntes Einkomponentensystem resultiert. Handelt es sich indes um ein besonders reaktives Vernetzungsmittel, wie ein Polyisocyanat oder ein Epoxid, wird dieses im allgemeinen erst kurz vor der Verwendung den erfindungsgemäßen Beschichtungsstoffen zugesetzt. Hierbei resultiert ein sogenanntes Zwei- oder Mehrkomponentensystem.

Der Gehalt der Zusammensetzungen an Vernetzungsmitteln kann außerordentlich breit variieren und richtet sich in erster Linie nach der Funktionalität der vorstehend beschriebenen Bindemittel. Vorzugsweise werden die Vernetzungsmitteln in einer Menge von, jeweils bezogen auf die Zusammensetzung, 0,5 bis 50, bevorzugt 1,0 bis 45, besonders bevorzugt 1,5 bis 40, ganz besonders bevorzugt 2,0 bis 35 und insbesondere 2,5 bis 30 Gew.-% eingesetzt.

Noch ein weiterer anwendungstechnisch wesentlicher Bestandteil der nach dem erfindungsgemäßen Verfahren hergestellten Zusammensetzungen ist mindestens ein Reaktiverdünner für die thermische Härtung oder für die Härtung mit aktinischer Strahlung.

Beispiele geeigneter Reaktiverdünner für die thermische Härtung sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl von 200 bis 450, ein zahlenmittleres Molekulargewicht Mn von 400 bis 1000 und ein massenmittleres Molekulargewicht Mw von 600 bis 1100 auf;

Weitere Beispiele geeigneter Polyole sind verzweigte, cyclische und/oder acyclische C₉₋C₁₆-Alkane, die mit mindestens zwei Hydroxylgruppen funktionalisiert sind, insbesondere Diethyloctandiole.

Weitere Beispiele zu verwendender Polyole sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Als strahlenhärtbare Reaktiwerdünner kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten. Ergänzend wird auf Römpp Lexikon Lacke und Druckfarben, Georg Thieme Verlag, Stuttgart, New York, 1998, »Reaktivverdünner«, Seite 491, verwiesen.

Ferner kann die nach dem erfindungsgemäßen Verfahren hergestellte Zusammensetzung Additive in wirksamen Mengen enthalten, wie sie in Beschichtungsstoffen, Klebstoffen und Dichtungsmassen üblicherweise verwendet werden. Beispiele geeigneter Additive sind:
- organische und anorganische Füllstoffe wie Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasem, Cellulosefasern, Polyethylenfasern oder Holzmehl;
- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Hanvermittler;
- Verlaufmittel;
- filmbildende Hilfsmittel wie Cellulose-Derivate;
- Flammschutzmittel;
- Wachse, beispielsweise in organischen Lösemitteln gelöste Acrylatcopolymerisat-Wachse;
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate; oder
- Photoinitiatoren, wie Photoinitiatoren vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten; beispielhaft sei hier auf Römpp Chemie Lexikon, 9. erweiterte und neubearbeitete Auflage, Georg Thieme Verlag, Stuttgart, Bd. 4, 1991, oder Römpp Lexikon Lacke und Druckfarben, Georg Thieme Verlag, Stuttgart, New York, 1998, »Photoinitiatoren«, Seiten 444 bis 446, verwiesen.

Weitere Beispiele geeigneter Lackadditive werden in dem Lehrbuch "Lackadditive" von Johan Bieleman, Wiley-VCH, Weinheim, New York, 1998, beschrieben.

Methodisch gesehen weist die Herstellung der nach dem erfindungsgemäßen Verfahren hergestellten Zusammensetzung keine Besonderheiten auf, sondern erfolgt im Rahmen des erfindungsgemäßen Verfahrens durch das Vermischen ihrer Bestandteile, wobei Primär-oder Sekundärdispersionverfahren sowie übliche und bekannte Mischaggregate wie Rührkessel, Dissolver, Rührwerksmühlen oder Extruder angewandt werden können.

Die resultierenden Zusammensetzungen dienen vorzugsweise der Herstellung der Beschichtungsstoffe, Klebstoffe und Dichtungsmassen, insbesondere aber der Beschichtungsstoffe. In dieser Anwendung weisen die nach dem erfindungsgemäßen Verfahren hergestellten Zusammensetzungen ganz besondere Vorteile auf. So können sie in hoher Konzentration hergestellt und als Konzentrate problemlos gelagert werden, wobei sie bereits alle Bestandteile enthalten, die für ihren späteren Verwendungszweck notwendig sind. Sie brauchen dann nur noch mit Wasser und/oder mit mindestens einem wassermischbaren organischen Lösemittel auf die Viskosität eingestellt werden, die für die Applikation jeweils notwendig ist - und dies auch nur in einer Menge, die für den jeweiligen Verwendungszweck gerade notwendig ist. Somit sind die nach dem erfindungsgemäßen Verfahren hergestellten Zusammensetzungen insbesondere hervorragend für die Herstellung von Kleinstmengen geeignet, wie sie beispielsweise für spezielle Farbtöne in der Automobilerstiackierung oder generell für die Autoreparaturlackierung bereitzustellen-sind. Hier erweist sich die Verwendung der nach dem erfindungsgemäßen Verfahren hergestellten Zusammensetzungen sowohl technisch als auch wirtschaftlich besonders vorteilhaft.

Erfindungsgemäß ist es hierbei von Vorteil, von wasserhaltigen oder weitgehend wasserfreien physikalisch, thermisch und thermisch und mit aktinischer Strahlung härtbaren Zusammensetzungen auszugehen, die dann mit Wasser verdünnt werden. Im Rahmen der vorliegenden Erfindung wird unter "weitgehend wasserfrei" ein Wassergehalt verstanden, der sich lediglich aus den über die einzelnen wasserhaltigen Bestandteile eingetragenen Mengen zusammensetzt.

Erfindungsgemäß ist es hierbei des weiteren von Vorteil, von wasserhaltigen physikalisch, thermisch und thermisch und mit aktinischer Strahlung härtbaren Zusammensetzungen auszugehen, die dann mit mindestens einem organischen Lösemittel oder einer Mischung aus mindestens einem Lösemittel und Wasser verdünnt werden, so dass konventionelle Beschichtungsstoffe, Klebstoffe und Dichtungsmassen resultieren.

Die resultierenden, nach dem erfindungsgemäßen Verfahren hergestellten Klebstoffe dienen der Herstellung der erfindungsgemäßen Klebschichten auf den nachstehend beschriebenen grundierten und ungrundierten Substraten.

Die resultierenden, nach dem erfindungsgemäßen Verfahren hergestellten Dichtungsmassen dienen der Herstellung der erfindungsgemäßen Dichtungen auf und in den nachstehend beschriebenen grundierten und ungrundierten Substraten.

Die resultierenden, nach dem erfindungsgemäßen Verfahren hergestellten Beschichtungsstoffe dienen der Herstellung der erfindungsgemäßen Beschichtungen auf den nachstehend beschriebenen grundierten und ungrundierten Substraten.

Auf diesem technologischen Gebiet weisen die nach dem erfindungsgemäßen Verfahren hergestellten Zusammensetzungen ganz besondere Vorteile auf und können sehr breit angewandt werden. So können die nach dem erfindungsgemäßen Verfahren hergestellten Beschichtungsstoffe, je nach ihrer Zusammensetzung als Füller zur Herstellung von Füllerlackierungen oder Steinschlagschutzgrundierungen, als Basislacke, insbesondere Wasserbasislacke, zur Herstellung von Basislackierungen, als Unidecklacke zur Herstellung von Unidecklackierungen oder als Klarlacke zur Herstellung von Klarlackierungen verwendet werden. Besonders bevorzugt werden die erfindungsgemäßen Beschichtungsstoffe für die Herstellung von Basislacken, insbesondere Wasserbasislacken, oder Unidecklacken angewandt.

Der nach dem erfindungsgemäßen Verfahren hergestellte Basislack, insbesondere der Wasserbasislack, ist hervorragend für die Herstellung von farb- und/oder effektgebenden Mehrschichtlackierungen auf grundierten und ungrundierten Substraten nach dem Nass-in-nass-Verfahren geeignet. Des Weiteren ist der nach dem erfindungsgemäßen Verfahren hergestellte Unidecklack, hervorragend für die Herstellung von einschichtigen farb-und/oder effektgebenden Lackierungen geeignet.

Besondere Vorteile entfaltet der nach dem erfindungsgemäßen Verfahren hergestellte Beschichtungsstoff in seiner Verwendung als Wasserbasislack im Rahmen des Nass-in-nass-Verfahrens bei dem der Wasserbasislack auf das grundierte oder ungrundierte Substrat appliziert und getrocknet, indes nicht gehärtet wird, wonach man auf die Wasserbasislackschicht einen Klarlack appliziert und die resultierende Klarlackschicht gemeinsam mit der Wasserbasislackschicht thermisch oder thermisch und mit aktinischer Strahlung (Dual Cure) härtet.

Als Substrate kommen alle zu lackierenden Oberflächen, die durch eine Härtung der hierauf befindlichen Schichten unter der Anwendung von Hitze oder der kombinierten Anwendung von Hitze und aktinischer Strahlung (Dual Cure) nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien. Demnach sind die erfindungsgemäßen Mehrschichtlackierungen auch für Anwendungen außerhalb der Automobilerstlackierung und der Autoreparaturlackierung geeignet. Hierbei kommen sie insbesondere für die Lackierung von Möbeln und für die industrielle Anwendung, inklusive Coil Coating und Container Coating, in Betracht. Im Rahmen der industriellen Anwendungen eignen sie sich für die Lackierung praktisch aller Teile für den privaten oder industriellen Gebrauch wie Radiatoren, Haushaltsgeräte, Kleinteile aus Metall wie Schrauben und Muttern, Radkappen, Felgen oder Emballagen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Üblicherweise wird, insbesondere in der Automobillackierung, hierauf noch eine Füllerlackierung oder Steinschlagschutzgrundierung aufgetragen, die als Bestandteil der Grundierung angesehen werden kann.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nicht funktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation der nach dem erfindungsgemäßen Verfahren hergestellten Wasserbasislack kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder - anlage bewegt wird. Indes kann auch das zu beschichtende Substrat, insbesondere ein Coil, bewegt werden, wobei die Applikationsanlage relativ zum Substrat ruht oder in geeigneter Weise bewegt wird. Enthalten die erfindungsgemäßen Wasserbasislacke Bestandteile, die mit aktinischer Strahlung aktivierbar sind, wird die Applikation vorzugsweise unter Ausschluss von Licht durchgeführt. Selbstverständlich können diese Applikationsmethoden im Rahmen des erfindungsgemäßen Nass-in-nass-Verfahrens auch für die Applikation der Klarlackschicht verwendet werden.

Die applizierten Wasserbasislackschichten und Klarlackschichten können in üblicher und bekannter Weise - gegebenenfalls nach einer gewissen Ruhezeit, die dem Verlauf der Schichten und/oder dem Verdampfen flüchtiger Bestandteile dient -thermisch oder thermisch und mit aktinischer Strahlung gehärtet werden.

Methodisch weist die thermische Härtung keine Besonderheiten auf, sondern es werden die üblichen und bekannten Temperaturen im Bereich von Raumtemperatur bis 200°C, Härtungszeiten im Bereich von einer Minute bis drei Stunden und Vorrichtungen wie Heizstrahler oder Umluftöfen angewandt.

Auch die Härtung mit aktinischer Strahlung weist keine methodischen Besonderheiten auf, sondern erfolgt in üblicher und bekannter Weise durch Bestrahlen mit UV-Lampen und/oder Elektronenstrahlquellen vorzugsweise unter Inertgas.

Bei der gemeinsamen Härtung der nach dem erfindungsgemäßen Verfahren hergestellten Dual Cure-Wasserbasislackschichten mit den Klarlackschichten können die thermische Härtung und Härtung mit aktinischer Strahlung gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist, aufgrund seines allgemeinen Fachwissens gegebenenfalls unter Zuhilfenahme einfacher Vorversuche ermitteln.

Hierbei zeigt sich als weiterer besonderer Vorteil des nach dem erfindungsgemäßen Verfahren hergestellten Wasserbasislacks, dass neben den nach dem erfindungsgemäßen Verfahren hergestellten Klarlacken sämtliche üblichen und bekannten Klarlacke im Rahmen des Nass-in-nass-Verfahrens mit der erfindungsgemäßen Wasserbasislackschicht kombiniert werden können.

Beispiele geeigneter bekannter Einkomponenten(1K)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wässrigen Medium dispergiert.

UV-härtbare Klarlacke gehen beispielsweise aus den Patentschriften EP-A-0 540 884, EP-A- 0 568 967 oder US-A-4,675,234 hervor.

Innerhalb der erfindungsgemäßen Mehrschichtlackierung kann die Dicke der einzelnen Schichten breit variieren. Erfindungsgemäß ist es indes von Vorteil, wenn die Wasserbasislackschicht eine Dicke von 5 bis 25 µm, insbesondere 7 bis 20µm, und die Klarlackschicht eine Dicke von 15 bis 120 µm, vorzugsweise 40 bis 80 µm und insbesondere 60 bis 70 µm aufweist.

Die erfindungsgemäßen Ein- und Mehrschichtlackierungen weisen hervorragende optische, mechanische und chemische Eigenschaften auf. So sind sie frei von jeglichen Oberflächenstörungen wie Schrumpf (wrinkling). Sie weisen außerdem eine besonders hohe Deckkraft, eine hervorragende Zwischenschichthaftung und hervorragende optische Effekte, insbesondere Metallic-Effekte, auf.

Insgesamt weisen die grundierten und ungrundierten Substrate, die mit einer nach dem erfindungsgemäßen Verfahren hergestellten Beschichtung beschichtet, mit einer nach dem erfindungsgemäßen Verfahren hergestellten Klebschicht verklebt und/oder mit einer nach dem erfindungsgemäßen Verfahren hergestellten Dichtungsmasse abgedichtet sind, ein besonders hervorragendes Eigenschaftsprofil, insbesondere eine besonders lange Gebrauchsdauer auf, was sie für den Anwender wirtschaftlich und technisch besonders attraktiv macht.

### Beispiele

### Beispiele 1 bis 4

### Die Herstellung thermisch härtbarer Zusammensetzungen und Beschichtungsstoffe

Für die Beispiele 1 bis 4 wurden die folgenden Bestandteile bereitgestellt bzw. hergestellt:

### 1. Polyurethandispersion A:

Die Polyurethandispersion A wurde gemäß der in der deutschen Patentschrift DE-A-44 37 535 auf Seite 7, Zeilen 21 bis 34, "B Herstellung einer wässrigen Polyurethandispersionen", angegebenen Vorschrift aus 248,82 Gewichtsteilen eines Polyesterdiols, hergestellt aus 1,81 Mol einer Dimerfettsäure (Pripol® 1009 der Firma Unichema; Dimerengehalt mindestens 98 Gew.-%, Trimerengehalt höchstens 2 Gew.-%, Monomerengehalt höchstens Spuren), 0,82 Mol Isophthalsäure, 0,61 Mol Hexandiol und 0,61 Mol Neopentylglykol, 2,64 Gewichtsteilen Neopentylglykol, 15,27 Gewichtsteilen Dimethylolpropionsäure, 77,07 Gewichtsteilen m-Tetramethylxylylendiisocyanat, 13,16 Gewichtsteile Trimethylolpropan und 8,41 Gewichtsteilen Dimethylethanolamin hergestellt und auf einen Festkörpergehalt von 31 Gew.-% eingestellt.

### 2. Sekundäre wässrige Acrylatdispersion A:

Die sekundäre wässrige Acrylatdispersion A wurde, genau wie in der deutschen Patentschrift Patentschrift DE-A-44 37 535 auf Seite 8, Zeilen 25 bis 49, "E Herstellung einer wässrigen Polyacrylatdispersion", beschrieben, hergestellt. Der Festkörpergehalt der Dispersion lag bei 40 Gew.-%.

### 3. Wässrige Lösung eines Polyesters A:

Die wässrige Lösung eines Polyesters A wurde analog der in der deutschen Patentschrift Patentschrift DE-A-44 37 535 auf Seite 7, Zeilen 6 bis 19, "Herstellung einer wässrigen Polyesterharzlösung", angegebenen Vorschrift aus 97,8 Gewichtsteilen Neopentylglykol, 62 Gewichtsteilen Hexahydrophthalsäureanhydrid, 229 Gewichtsteile Dimerfettsäure Pripol® 1009, 111 Gewichtsteile Hexandiol, 102,9 Gewichtsteile Trimellithsäureanhydrid und 2,3. Gewichtsteilen Dimethylethanolamm unter Verwendung von 20 Gewichtsteilen Xylol (Schleppmittel) und 20 Gewichtsteilen Butylcellosolve (Colösemittel) hergestellt und mit Wasser auf einen Festkörpergehalt von 60 Gew.-% eingestellt.

### 4. Wässrige Lösung eines Polyesters B:

Die wässrige Lösung eines Polyesters A wurde nach der in der deutschen Patentschrift Patentschrift DE-A-44 37 535 auf Seite 7, Zeilen 6 bis 19, "Herstellung einer wässrigen Polyesterharzlösung", angegebenen Vorschrift hergestellt. Anstelle der dort angegebenen 158 Gewichtsteile Dimethylethanolamin wurden jedoch 16,2 Gewichtsteile Dimethylethanolamin verwendet.

### 5. Mattierungspaste (weiß-grau):

Die Mattierungspaste wurde durch Vermischen von 30 Gewichtsteilen der Polyesterlösung B gemäß Ziff. 4., 46 Gewichtsteilen Butylglykol, 12 Gewichtsteilen einer 10 %igen Lösung von Dimethylethanolamin in Wasser und 12 Gewichtsteilen eines handelsüblichen pyrogenen Siliziumdioxids (Syloid® ED 3) hergestellt.

### 6. Wassertönpaste (weiß):

Die Wassertönpaste wurde durch Vermischen von 63,7 Gewichtsteilen der vorstehend beschriebenen Polyurethandispersion A (vgl. Ziff. 1.), 2,7 Gewichtsteilen deionisiertem Wasser, 32 Gewichtsteilen eines handelsüblichen Titandioxid-Pigments vom Rutiltyp (Titan® UV L 530), 0,3 Gewichtsteilen eines handelsüblichen pyrogenen Siliziumdioxids (Aerosil® R 972) und 1,3 Gewichtsteilen einer 10 %igen Lösung von Dimethylethanolamin in Wasser hergestellt.

### 7. Wassertönpaste (farblos, transparent):

Die Wassertönpaste wurde durch Vermischen von 62,9 Gewichtsteilen der vorstehend beschriebenen Polyurethandispersion A (vgl. Ziff. 1.), 2,0 Gewichtsteilen eines handelsüblichen Polyetherpolyols (Pluriol® P 900), 09 Gewichtsteilen Aerosil® R 972, 30 Gewichtsteilen eines handelsüblichen Titandioxid-Pigments vom Rutiltyp (Titan Rutil Tayca® MT500 HD), 3,8 Gewichtsteilen deionisiertem Wasser und 0,4 Gewichtsteilen eine 10 %igen Lösung von Dimethylethanolamin in Wasser hergestellt.

### 8. Metallic-Pigment:

65%ige Suspension von Aluminiumflakes (Alu-Stapa Hydrolux® 2192 der Firma Eckart).

### 9. Vernetzungsmittel:

### 9.1 Handelsübliche Melaminharzlösung (72%ig) (Cymel® 203).

### 9.2 Handelsübliches Melaminharz (99,9%ig) (Cymel® 1133)

### 10. Netzmittel:

Handelsübliches Netzmittel (Byk® 345 der Firma Byk Chemie).

### 11. Erfindungsgemäß zu verwendende Verbindung I (Harnstoffurethan):

Handelsübliches Rheologieadditiv (Byk® 410 der Firma Byk Chemie; 52 %ig in N-Methylpyrrolidon).

### 12. Polyurethandispersion B:

Die Polyurethandispersion B wurde nach der in der deutschen Patentschrift DE 43 39 870 A1 in Spalte 11, Zeile 47, bis Spalte 12, Zeile 20, ,,1. Herstellung einer erfindungsgemäßen Bindemitteldispersion", angegebenen Vorschrift hergestellt.

### 13. Wachspaste:

6%ige Dispersion eines Acrylatcopolymerisat-Wachses in Butylacetat/Xylol.

### Beispiele 1 bis 3

### Die Herstellung einer Zusammensetzung und die Herstellung eines Wasserbasislacks (Beispiel 1) und konventioneller Basislacke (Beispiele 2 und 3) hieraus

Die erfindungsgemäße Zusammensetzung wurde durch Vermischen der folgenden vorstehend beschriebenen Bestandteile in den angegebenen Mengen hergestellt:
21,0 Gewichtsteile Bestandteil 1,
5,0 Gewichtsteile Bestandteil 2,
4,0 Gewichtsteile Bestandteil 3,
1,6 Gewichtsteile Bestandteil 5,
3,9 Gewichtsteile Bestandteil 6,
0,9 Gewichtsteile Bestandteil 7,
5,0 Gewichtsteile Bestandteil 8,
4,5 Gewichtsteile Bestandteil 9.1
0,1 Gewichtsteile Bestandteil 10,
5,0 Gewichtsteile Bestandteil 11
5,0 Gewichtsteile Isopropanol und
6,0 Gewichtsteile Butylglykol.

Die resultierende erfindungsgemäße Zusammensetzung war völlig lagerstabil. Insbesondere ihre Viskosität änderte sich nicht.

Für das Beispiel 1 wurde die erfindungsgemäße Zusammensetzung mit 38 Gewichtsteilen deionisiertem Wasser unter Rühren verdünnt. Es resultierte ein Wasserbasislack (Festkörpergehalt: 20,87 Gew.-%) der Farbe Satinsilber, der ebenfalls völlig lagerstabil war und zusammen mit den unterschiedlichsten Klarlacken hervorragende farb- und effektgebende Mehrschichtlackierungen lieferte.

Für das Beispiel 2 wurde die erfindungsgemäße Zusammensetzung mit 38 Gewichtsteilen Isopropanol verdünnt. Es resultierte ein konventioneller Basislack (Festkörpergehalt: 20,87 Gew.-%) der Farbe Satinsilber, der ebenfalls völlig lagerstabil war und zusammen mit den unterschiedlichsten Klarlacken hervorragende farb- und effektgebende Mehrschichtlackierungen lieferte.

Für das Beispiel 3 wurde der konventionelle Basislack des Beispiels 2 mit 32,5 Gewichtsteilen Butylacetat und 7,5 Gewichtsteilen Butyldiglykolacetat weiter verdünnt. Es resultierte ein verdünnter konventioneller Basislack (Festkörpergehalt: 14,91 Gew.-%) der Farbe Satinsilber, der ebenfalls völlig lagerstabil war und zusammen mit den unterschiedlichsten Klarlacken hervorragende farb- und effektgebende Mehrschichtlackierungen lieferte.

### Beispiel 4

### Die Herstellung einer Zusammensetzung und eines verdünnten konventionellen Basislacks hieraus

Die erfindungsgemäße Zusammensetzung wurde durch Vermischen der folgenden vorstehend beschriebenen Bestandteile in den angegebenen Mengen hergestellt:
21,33 Gewichtsteilen Bestandteil 12,
1,07 Gewichtsteile Bestandteil 5,
2,6 Gewichtsteile Bestandteil 6,
0,6 Gewichtsteile Bestandteil 7,
4,0 Gewichtsteile Bestandteil 9.2,
3,33 Gewichtsteile Bestandteil 11,
3,33 Gewichtsteile Bestandteil 8,
0,04 Gewichtsteile Bestandteil 10,
7,29 Gewichtsteile Bestandteil 13,
26,4 Gewichtsteile Isopropanol und
4,0 Gewichtsteile Butylglykol.

Die resultierende, ihrer Natur nach konventionelle, d. h. überwiegend organische Lösemittel enthaltende, Zusammensetzung war völlig lagerstabil. Insbesondere ihre Viskosität änderte sich nicht.

Die Zusammensetzung wurde mit 8,67 Gewichtsteilen Solventnaphtha, 8,67 Gewichtsteilen Butylacetat und 8, 67 Gewichtsteilen Butylglykol unter Rühren verdünnt. Es resultierte ein verdünnter konventioneller Basislack (Festkörpergehalt: 17,81 Gew.-%) der Farbe Satinsilber, der ebenfalls völlig lagerstabil war und zusammen mit den unterschiedlichsten Klarlacken hervorragende farb- und effektgebende Mehrschichtlackierungen lieferte.

## Patentansprüche

1. Verfahren zur Herstellung wässriger Beschichtungsstoffe, Klebstoffe und Dichtungsmassen, **dadurch gekennzeichnet, dass** man
(1) eine wasserhaltige oder wasserfreie, physikalisch, thermisch und thermisch und mit aktinischer Strahlung härtbare Zusammensetzung, enthaltend, bezogen auf die Zusammensetzung (1), 0,1 bis 10 Gew.-% mindestens einer Harnstoff- und Urethangruppen aufweisenden Verbindung der allgemeinen Formel I :
**X[NH-C(=O)-NH-Y-NH-C(=O)-OR]**_{**2**} **(I),**
worin die Variablen die folgende Bedeutung haben:
R gleiche oder voneinander verschiedene Poly(alkylenether)reste;
X zweiwertiger substituierter oder unsubstituierter Arylenrest;
Y gleiche zweiwertige, substituierte oder unsubstituierte Arylenreste, die gleich dem Rest X oder hiervon verschieden sind, oder
voneinander verschiedene zweiwertige, substituierte oder unsubstituierte Arylenreste, von denen keiner oder einer gleich dem Rest X ist,
aus ihren Bestandteilen durch Vermischen herstellt und
(2) die resultierende Zusammensetzung mit Wasser oder mit mindestens einem organischen Lösemittel oder mit einer Mischung aus mindestens einem Lösemittel und Wasser verdünnt.

2. Verfahren nach Anspruch 1, **dadurch gekennzeichnet, dass** die Polyalkylenglykoletherreste R die allgemeine Formel || aufweisen:
**-(-R**^{**1**}**-O-)**_{**n**}**-R**^{**2**} **(II),**
worin der Index und die Variablen die folgende Bedeutung haben:
| | | |
|---|---|---|
| n | = | 2 bis 10; |
| R¹ | = | Alkandiylrest mit 2 bis 4 Kohlenstoffatomen; und |
| R² | = | Alkylrest mit 1 bis 6 Kohlenstoffatomen oder Cycloalkylrest mit 4 bis 7 Kohlenstoffatomen. |

3. Verfahren nach Anspruch 1 oder 2, **dadurch gekennzeichnet, dass** als Reste X und Y substituierte und/oder unsubstituierte Phenylen-, Naphthylen-, Biphenylylen- und/oder Alkandiphenylylenreste verwendet werden.

4. Verfahren nach Anspruch 3, **dadurch gekennzeichnet, dass** als Reste X und Y alkylsubstituierte Phenylenreste verwendet werden.

5. Verwendung der nach dem Verfahren gemäß einem der Ansprüche 1 bis 4 hergestellten wässrigen Beschichtungsstoffe, Klebstoffe und Dichtungsmassen für die Herstellung von Beschichtungen, Klebschichten und Dichtungen auf und in grundierten und ungrundierten Substraten.

6. Verwendung nach Anspruch 5, **dadurch gekennzeichnet, dass** die wässrigen Beschichtungsstoffe Füller, Basislacke, Unidecklacke und Klarlacke zur Herstellung von Füllerlackierungen, Basislackierungen, Unidecklackierungen und Klarlackierungen sind.

7. Verwendung nach Anspruch 6, **dadurch gekennzeichnet, dass** die Basislacke Wasserbasislacke sind.

8. Verwendung nach Anspruch 6 oder 7, **dadurch gekennzeichnet, dass** die Basislacke der Herstellung farb- und/oder effektgebender Mehrschichtlackierungen dienen.

9. Verwendung nach Anspruch 8, **dadurch gekennzeichnet, dass** die farb- und/oder effektgebenden Mehrschichtlackierungen nach dem Nass-in-nass-Verfahren, bei dem der Wasserbasislack auf das grundierte oder ungrundierte Substrat appliziert und getrocknet, indes nicht gehärtet wird, wonach man auf die Wasserbasislackschicht einen Klarlack appliziert und die resultierende Klarlackschicht gemeinsam mit der Wasserbasislackschicht thermisch oder thermisch und mit aktinischer Strahlung härtet.

## Claims

1. Process for preparing aqueous coating materials, adhesives or sealing compounds, **characterized in that**
(1) an aqueous or anhydrous composition, curable physically, thermally, or thermally and with actinic radiation and comprising, based on the composition (1), from 0.1 to 10% by weight of at least one compound, containing urea and urethane groups, of the general formula I
**X[NH-C(=O)-NH-Y-NH-C(=O)-OR]**_{**2**} **(I),**
in which the variables have the following definition:
R denotes identical or different poly(alkylene-ether) radicals;
X denotes divalent substituted or unsubstituted arylene radical;
Y denotes identical divalent, substituted or unsubstituted arylene radicals identical to or different from the radical X, or
denotes different divalent, substituted or unsubstituted arylene radicals, of which none or one is identical to the radical X;
is prepared from its constituents by mixing and
(2) the resulting composition is diluted with water or with at least one organic solvent or with a mixture of at least one solvent and water.

2. Process according to Claim 1, **characterized in that** the polyalkylene glycol ether radicals R have the general formula II:
**-(-R**^{**1**}**-O-)**_{**n**}**-R**^{**2**} (II),
in which the index and the variables have the following definition:
| | | |
|---|---|---|
| n | = | 2 to 10; |
| R¹ | = | alkanediyl radical having 2 to 4 carbon atoms; and |
| R² | = | alkyl radical having 1 to 6 carbon atoms or cycloalkyl radical having 4 to 7 carbon atoms. |

3. Process according to Claim 1 or 2, **characterized in that** substituted or unsubstituted phenylene, naphthylene, biphenylylene and/or alkanediphenylylene radicals are used as radicals X and Y.

4. Process according to Claim 3, **characterized in that** alkyl-substituted phenylene radicals are used as radicals X and Y.

5. Use of the aqueous coating materials, adhesives and sealing compounds prepared by the process according to one of Claims 1 to 4 for producing coatings, adhesive layers and seals on and in primed and unprimed substrates.

6. Use according to Claim 5, **characterized in that** the aqueous coating materials are surfacers, basecoat, solid-colour topcoat and clearcoat materials for producing surfacer coats, basecoats, solid-colour topcoats and clearcoats.

7. Use according to Claim 6, **characterized in that** the basecoat materials are aqueous basecoat materials.

8. Use according to Claim 6 or 7, **characterized in that** the basecoat materials serve for producing multicoat colour and/or effect paint systems.

9. Use according to Claim 8, **characterized in that** the multicoat colour and/or effect paint systems are produced by the wet-on-wet technique, in which the aqueous basecoat material is applied to the primed or unprimed substrate and dried but not cured, after which a clearcoat material is applied to the aqueous basecoat film and the resulting clearcoat film is cured thermally, or both thermally and with actinic radiation, together with the aqueous basecoat film.

## Revendications

1. Procédé de préparation de matières de revêtement, de colles et de masses d'étanchéité aqueuses, **caractérisé en ce qu'**on prépare à partir de ses constituants et par mélange
(1) une composition, avec ou sans eau, durcissable physiquement, thermiquement et par voie thermique et avec rayonnement actinique, contenant, sur base de la composition (1), de 0,1 à 10% en poids d'au moins un composé présentant des groupes urée et uréthanne de formule générale I
**X[NH-C(=O)-NH-Y-NH-C(=O)-OR]**_{**2**} **(I)**
dans laquelle les variables ont la signification suivante :
R représente des radicaux de poly (alkylène éther) identiques ou différents l'un de l'autre;
X représente un radical arylène divalent substitué ou non substitué;
Y représente des radicaux arylène identiques divalents, substitués ou non substitués, qui sont identiques au radical X ou qui lui sont différents, ou
représente des radicaux arylène différents l'un de l'autre divalents, substitués ou non substitués, dont aucun ou un est identique au radical X, et
(2) la composition résultante est diluée avec de l'eau ou avec au moins un solvant organique ou avec un mélange constitué au moins d'un solvant et d'eau.

2. Procédé selon la revendication 1, **caractérisé en ce que** les radicaux polyalkylèneglycoléther R présentent la formule générale II :
**-(-R**^{**1**} **-O-)**_{**n**}**-R**^{**2**} **(II)**
dans laquelle l'indice et les variables ont la signification suivante:
| | | |
|---|---|---|
| n | = | 2 à 10; |
| R¹ | = | un radical alcanediyle avec 2 à 4 atomes de carbone, et |
| R² | = | un radical alkyle avec 1 à 6 atomes de carbone ou un radical cyclalkyle avec 4 à 7 atomes de carbone. |

3. Procédé selon la revendication 1 ou 2, **caractérisé en ce qu'**on utilise comme radicaux X et Y des radicaux phénylène, naphthylène, biphénylylène et/ou alcanediphénylylène substitués et/ou non substitués.

4. Procédé selon la revendication 3, **caractérisé en ce qu'**on utilise comme radicaux X et Y des radicaux phénylène substitués par un alkyle.

5. Utilisation des matières de revêtement, colles et masses d'étanchéité aqueuses préparées selon le procédé d'après l'une quelconque des revendications 1 à 4, pour la préparation de revêtements, couches de colle et joints d'étanchéité sur et dans des substrats avec ou sans couche de fond.

6. Utilisation selon la revendication 5, **caractérisée en ce que** les matières de revêtement, charges, peintures de base, peintures Unideck et laques transparentes aqueuses servent à la préparation de laquages de charge, de laquages de base, de laquage Unideck et de laquages transparents.

7. Utilisation selon la revendication 6, **caractérisée en ce que** les peintures de base sont des peintures à base d'eau.

8. Utilisation selon la revendication 6 ou 7, **caractérisée en ce que** les peintures de base servent à la préparation de laquages multicouches de couleur et/ou à effets.

9. Utilisation selon la revendication 8, **caractérisée en ce que** les laquages multicouches de couleur et/ou à effets sont appliqués conformément au procédé mouillé, dans lequel la peinture à base d'eau est appliquée sur le substrat avec ou sans couche de fond, puis séchée, sans être durcie, après quoi on applique sur la couche de peinture à base d'eau une laque transparente et la couche de laque transparente qui en résulte est durcie avec la couche de peinture à base d'eau thermiquement ou par voie thermique et avec rayonnement actinique.
